(19) **Europäisches Patentamt**

**European Patent Office**

**Office européen des brevets**

(11) **EP 0 911 673 B1**

(12) **FASCICULE DE BREVET EUROPEEN**

(45) Date de publication et mention
de la délivrance du brevet:
**12.09.2001   Bulletin 2001/37**

(51) Int Cl.⁷: **G02C 7/02**

(21) Numéro de dépôt: **98402534.6**

(22) Date de dépôt: **13.10.1998**

(54) **Lentille ophtalmique multifocale**

Multifokale ophthalmische Linse

Multifocal ophthalmic lens

(84) Etats contractants désignés:
**BE CH DE ES GB IE IT LI NL PT**

(30) Priorité: **16.10.1997   FR 9712988**

(43) Date de publication de la demande:
**28.04.1999   Bulletin 1999/17**

(73) Titulaire: **ESSILOR INTERNATIONAL
COMPAGNIE GENERALE D'OPTIQUE
94227 Charenton cédex (FR)**

(72) Inventeurs:
• **Le Saux, Gilles
75010 Paris (FR)**
• **Pedrono, Claude
91640 Briis sous Forges (FR)**
• **Rossier, Claire
75005 Paris (FR)**

(74) Mandataire: **Desrousseaux, Grégoire Marie et al
Cabinet HIRSCH-DESROUSSEAUX-POCHART,
34 rue de Bassano
75008 Paris (FR)**

(56) Documents cités:
**EP-A- 0 738 911          GB-A- 2 261 527
GB-A- 2 273 369**

• **GUILINO G H: "DESIGN PHILOSOPHY FOR
PROGRESSIVE ADDITION LENSES" APPLIED
OPTICS, vol. 32, no. 1, 1 janvier 1993, pages
111-117, XP000331309**

**Description**

La présente invention a pour objet une lentille ophtalmique multifocale, comportant une surface asphérique présentant en tout point une sphère moyenne et un cylindre.

De telles lentilles sont bien connues; on peut parmi ces lentilles multifocales distinguer des lentilles appelées lentilles progressives adaptées à la vision à toutes les distances, et des lentilles plus spécifiquement dédiées à la vision de près et à la vision intermédiaire.

Les lentilles ophtalmiques multifocales progressives comprennent une zone de vision de loin, une zone de vision de près, une zone de vision intermédiaire, une méridienne principale de progression traversant ces trois zones. Le document FR-A-2 699 294 décrit dans son préambule les différents éléments d'une lentille ophtalmique multifocale progressive (méridienne principale de progression, zone de vision de loin, zone de vision de près, etc.), ainsi que les travaux menés par la demanderesse pour améliorer le confort des porteurs de telles lentilles.

La demanderesse a aussi proposé, pour mieux satisfaire les besoins visuels des presbytes et améliorer le confort des lentilles multifocales progressives, d'adapter la forme de la méridienne principale de progression, en fonction de l'addition de puissance A (demande de brevet FR-A-2 683 642)

Pour de telles lentilles, on appelle addition de puissance A la variation de sphère moyenne entre un point de référence de la zone de vision de loin et un point de référence de la zone de vision de près.

Ces lentilles progressives sont généralement prescrites en fonction de l'amétropie du porteur et de la puissance nécessaire en vision de près.

Il existe aussi des lentilles dédiées plus spécifiquement à la vision de près; ces lentilles ne présentent pas une zone de vision de loin avec un point de référence défini comme dans les lentilles progressives classiques. Ces lentilles sont prescrites en fonction de la puissance nécessaire au porteur en vision de près, indépendamment de la puissance en vision de loin. Une telle lentille est décrite dans une article de l'Opticien Lunetier d'avril 1988, et est commercialisée par la demanderesse sous la marque Essilor Delta; cette lentille est aussi simple à utiliser et facile à supporter qu'une lentille progressive, et est attirante pour la population des presbytes non équipée de lentilles progressives. Cette lentille est aussi décrite dans la demande de brevet FR-A-2 588 973. Elle présente une partie centrale qui équivaut au verre unifocal que l'on utiliserait normalement pour corriger la presbytie, de sorte à assurer une vision de près satisfaisante. Elle présente en outre une légère décroissance de puissance dans la partie supérieure, qui assure au porteur une vision nette aussi au delà du champ habituel de vision de près. Enfin, la lentille présente un point à une valeur de puissance égale à la puissance nominale de vision de près, une zone de puissance plus élevée dans la partie inférieure du verre, et une zone de puissance plus faible dans la partie supérieure du verre.

Les lentilles multifocales existantes, qu'elles soient progressives ou dédiées à la vision de près, peuvent encore être améliorées en ce qui concerne les performances en vision fovéale, pour augmenter ainsi le confort des porteurs. En effet, les porteurs de lentilles multifocales ressentent parfois une gêne en vision dynamique. Elles peuvent aussi être améliorées en conservant une zone de vision de près suffisamment haute pour assurer au porteur un confort optimum; enfin, il importe d'assurer des champs de vision larges, en vision de près, en vision intermédiaire et en vision de loin.

La présente invention propose une lentille multifocale qui pallie les inconvénients des lentilles de l'art antérieur et qui assure au porteur une grande douceur, une zone de vision de près haute, et des champs de vision larges dans la zone de vision de près, dans la zone de vision intermédiaire comme dans la zone de vision de loin. Elle assure en outre au porteur une grande douceur, dans toutes les zones de la lentille.

L'invention a pour objet une lentille ophtalmique multifocale, comportant une surface asphérique présentant en tout point une sphère moyenne et un cylindre, et comprenant une zone de vision de loin, une zone de vision de près, une zone de vision intermédiaire, une méridienne principale de progression traversant ces trois zones, caractérisée en ce que la longueur principale de progression est inférieure à 16 mm, et en ce que le rapport entre le cylindre maximal $C_{max}$ dans un cercle de rayon de 20 mm centré sur le centre géométrique de la lentille et la distance d entre le centre géométrique de la lentille et le point à l'intérieur de ce cercle où ce cylindre maximal est atteint est inférieur ou égal à la moitié de la pente maximale de sphère moyenne $P_{mer}$ sur la méridienne principale de progression:

$$C_{max}/d < 0,50.P_{mer}$$

Avantageusement, la méridienne principale de progression est constituée des milieux des segments horizontaux reliant les lignes respectives formées des points de cylindre 0,50 dioptrie.

Dans un mode de réalisation, la lentille est une lentille multifocale dédiée à la vision de près et à la vision intermédiaire, et elle présente une addition définie comme la différence entre les valeurs maximale et minimale de la sphère moyenne sur la méridienne principale de progression, dans un cercle de rayon de 20 mm centré sur le centre géométrique de la lentille.

Dans ce cas, la longueur principale de progression est de préférence définie comme le rapport entre l'addition A et la pente maximale de sphère moyenne sur la méridienne.

Dans un autre mode de réalisation, la lentille est une lentille multifocale progressive, et elle présente un point de référence pour la zone de vision de près, un point de référence pour la zone de vision de loin, et une addition définie comme la différence entre les valeurs de sphère moyenne en ces deux points.

Dans ce cas, la longueur principale de progression est de préférence définie comme la distance verticale entre une croix de montage et un point de la méridienne où la sphère moyenne est supérieure de 85% de l'addition à la sphère moyenne au point de référence de la zone de vision de loin.

Avantageusement, le cylindre dans le cercle de rayon 20 mm centré sur le centre géométrique de la lentilles est inférieur à l'addition, de préférence inférieur à 80% de l'addition.

Dans un autre mode de réalisation, la différence entre le cylindre maximal de part et d'autre de la méridienne, dans le cercle de rayon 20 mm centré sur le centre géométrique de la lentille, est inférieure à 0,05 dioptrie, et de préférence inférieur à 0, 03 dioptrie.

De préférence, l'angle entre les demi-droites issues du centre géométrique de la lentille et passant par les points d'intersection du dit cercle et des lignes formées des points dont le cylindre est égal à la moitié de l'addition, dans la zone de vision de près, est supérieur à 45°.

La zone de vision de loin, délimitée dans la partie supérieure de la lentille par les lignes formées des points dont le cylindre est égal à la moitié de l'addition, contient avantageusement un secteur angulaire formé de deux demi-droites d'origine le centre géométrique de la lentille et ayant un angle au centre supérieur à 130°, et de préférence compris entre 160 et 165°.

D'autres caractéristiques et avantages de la présente invention apparaîtront à la lecture de la description qui suit d'un mode de réalisation de l'invention, donnée à titre d'exemple et en référence aux dessins annexés qui montrent:

- figure 1 une vue schématique de face d'une lentille multifocale progressive;
- figure 2 une représentation graphique de la puissance le long de la méridienne d'une lentille selon l'invention;
- figure 3 une vue de face de la lentille de la figure 2, montrant la méridienne principale de progression et des lignes de niveau de la sphère moyenne;
- figure 4 une vue de face de la lentille de la figure 2, montrant la méridienne principale de progression et des lignes de niveau du cylindre;
- figure 5 une vue analogue à celle de la figure 2, pour une addition de 2 dioptries;
- figure 6 une vue analogue à celle de la figure 3, pour une addition de 2 dioptries;
- figure 7 une vue analogue à celle de la figure 4, pour une addition de 2 dioptries;
- figure 8 une vue analogue à celle de la figure 2, pour une addition de 3 dioptries;
- figure 9 une vue analogue à celle de la figure 3, pour une addition de 3 dioptries;

- figure 10 une vue analogue à celle de la figure 4, pour une addition de 3 dioptries.

Dans la suite de la présente description, on utilise un système de coordonnées orthonormé où l'axe des abscisses correspond à l'axe horizontal de la lentille et l'axe des ordonnées à l'axe vertical; le centre O du repère est le centre géométrique de la lentille.

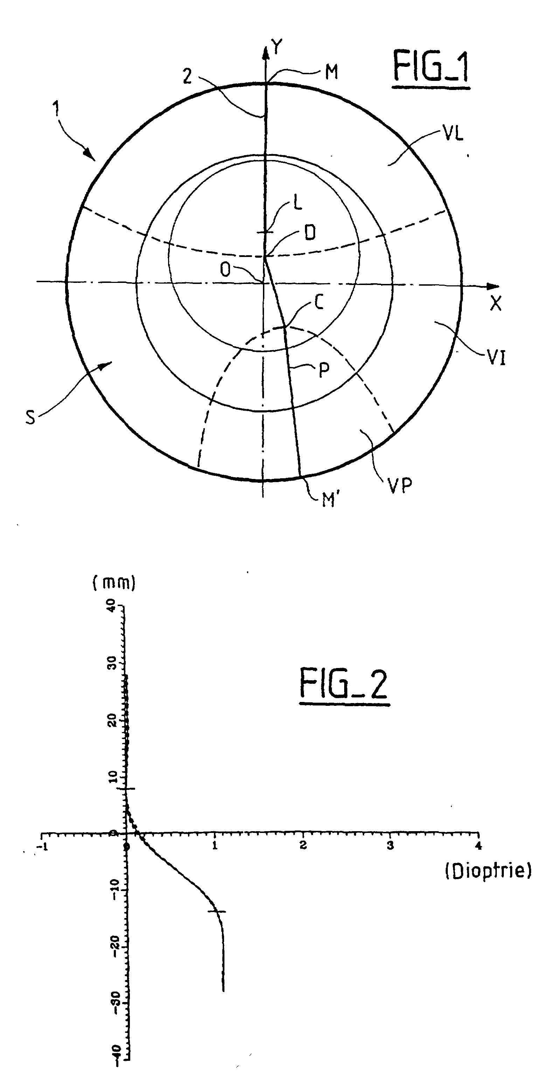

La figure 1 montre une vue schématique de face d'une lentille ophtalmique progressive connue, avec les divers éléments de cette lentille.

Les figures 2 à 4 représentent les caractéristiques optiques d'une lentille selon l'invention, qui présente un diamètre de l'ordre de 60 mm. On a décrit en référence à ces figures une lentille présentant une addition de une dioptrie.

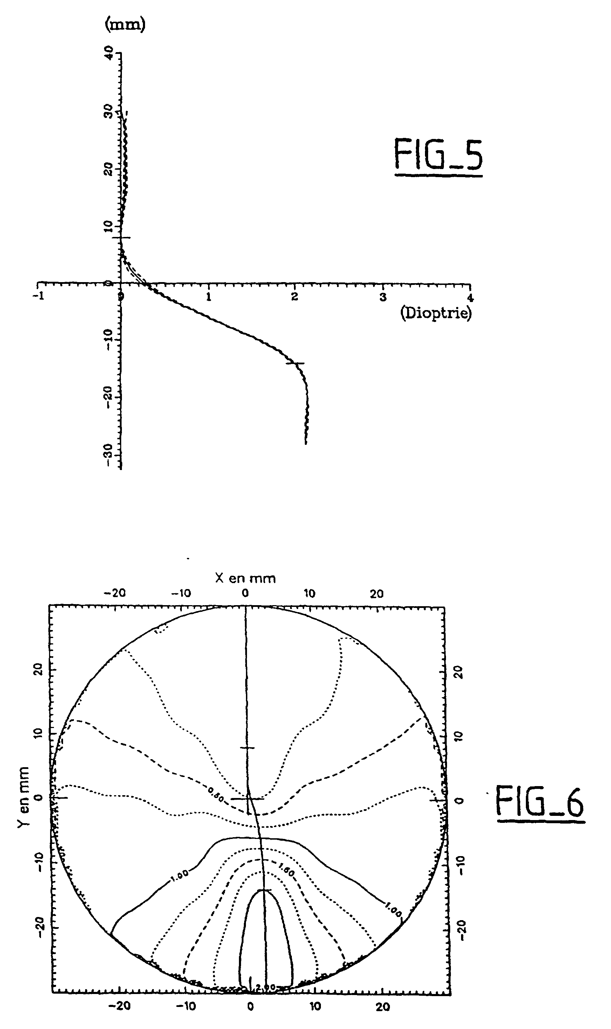

Les figures 5 à 10 représentent des vues analogues, pour des lentilles d'addition 2 ou 3.

On décrit maintenant en référence à la figure 1 les différents éléments d'une lentille ophtalmique multifocale. Une telle lentille présente généralement une face asphérique représentée sur la figure 1 et une autre face qui peut être sphérique ou torique.

En tout point de la surface asphérique, on définit une sphère moyenne D donnée par la formule:

$$D = \frac{n-1}{2} \left( \frac{1}{R_1} + \frac{1}{R_2} \right)$$

où:

$R_1$ et $R_2$ sont les rayons de courbure maximal et minimal exprimés en mètres, et
n l'indice du matériau constituant la lentille.

On définit aussi un cylindre C, donné par la formule:

$$C = (n-1) \left| \frac{1}{R_1} - \frac{1}{R_2} \right|$$

On appelle lignes d'isosphère les lignes constituées par les projections dans le plan tangent à la surface progressive en O des points de la surface présentant une sphère moyenne de même valeur. De la même façon, on appelle ligne d'isocylindre les lignes constituées par la projection dans le plan précité des points de la surface présentant un cylindre de même valeur.

Classiquement, la lentille 1 comprend dans sa partie supérieure une zone de vision de loin VL, dans sa partie inférieure une zone de vision de près VP, et entre ces deux zones une zone intermédiaire VI. Pour une lentille progressive, on définit dans la zone de vision de près et dans la zone de vision de loin un point P de référence ou de mesure pour la vision de près et un point L de référence ou de mesure pour la vision de loin. Pour une lentille dédiée à la vision de près, on définit dans la zone de vision de près un point P de référence ou de mesure pour la vision de près; toutefois, on ne définit pas de point de référence correspondant pour la zone de vision de loin.

On a représenté sur la figure 1 en gras la méridienne principale de progression 2 de la lentille, qui traverse les zones de vision de loin, de vision intermédiaire et de vision de près. Cette méridienne est définie comme le lieu des points milieux des segments horizontaux délimités par les courbes d'isocylindre 0,50 dioptrie. Dans l'exemple de la figure 1, elle est essentiellement constituée de trois segments, le premier s'étendant sensiblement verticalement depuis le haut de la lentille, en passant par le point L, jusqu'à un point D appelé centre de montage ou croix de montage et situé entre ce point L et le centre géométrique O. Le deuxième segment s'étend à partir du point D obliquement en direction du côté nasal de la lentille, et le troisième segment part de l'extrémité C du deuxième segment et passe par le point P de mesure de la vision de près. D'autres formes de méridiennes sont possibles.

Dans le cas des lentilles ophtalmiques multifocales progressive, on définit de manière connue en soi une addition de puissance, qui est la différence de sphère moyenne entre un point P de référence de la zone de vision de près et un point L de référence de la zone de vision de loin.

Pour les lentilles multifocales dédiées à la vision de près et à la vision intermédiaire, on mesure sur la méridienne ainsi définie les valeurs minimales et maximales de la sphère, dans la limite d'un cercle de rayon 20 mm, centré sur le centre géométrique de la lentille. On appelle alors addition la différence entre ces valeurs minimales et maximales de la sphère; cette définition est sensiblement équivalente, pour les lentilles progressives, à la définition classique de l'addition comme la différence de sphère entre les points de référence pour la vision de près et la vision de loin.

Avec ces définitions, on considère généralement que la zone de vision de loin est délimitée, dans la partie supérieure de la lentille par les lignes d'isocylindre de valeur égale à la moitié de l'addition. De la même façon, la zone de vision de près est délimitée, dans la partie inférieure de la lentille, par les isocylindres de valeur égale à la moitié de l'addition.

Dans les lentilles de l'art antérieur, et en particulier dans celles de la demanderesse, la vision dans la zone entourant la méridienne principale de progression est tout à fait satisfaisante.

On a aussi représenté en gras sur la figure 1 la zone du verre balayée par le regard pour les tâches courantes. La taille et la position de cette zone, appelée zone de vision fovéale, ont été déterminées par de nombreuses campagnes de mesure effectuées dans les laboratoires de la demanderesse; on pourra se référer par exemple à IEEE 1992, Portable eye movement recorder, T. Bonnin et N. Bar, Proceedings of the 14th Annual International conference on the IEEE Engineering in Medecine and Biology Society 1992, Part 4, pages 1668-1669, à AAO 1993, Optimization of ophthalmic aspheric lenses: recording of eye movement for everyday tasks, N. Bar, T. Bonnin, C. Pedrono, Optometry and Vision Science 1993, no 12s, vol. 70 page 154, ou encore à ECEM 93, The use of visual space, poster de N. Bar. Cette zone recouvre un disque de 30 mm de diamètre centré sur le centre de montage.

Pour assurer au porteur un confort de vision maximal, on considère le disque de diamètre 40 mm centré sur le centre géométrique de la lentille, englobant la zone de vision fovéale et, comme expliqué en détail dans la suite de la présente description, on impose, à l'intérieur de ce cercle, que la quantité $C_{max}/d$ soit inférieure à $0,50.P_{mer}$. Les défauts tels que le cylindre sont ainsi maîtrisés dans cette zone, ce qui garantit le mieux possible une vision nette dans la zone de vision fovéale.

Pour améliorer la douceur des lentilles, et le confort en zone de vision fovéale, la présente invention propose de considérer une nouvelle définition des caractéristiques de la surface de la lentille, expliquée en référence aux figures suivantes. Ces figures correspondent au cas de lentilles multifocales progressives; l'invention s'applique mutatis mutandis aux lentilles multifocales dédiées à la vision de près.

La figure 2 est une représentation graphique de la puissance le long de la méridienne d'une lentille selon l'invention, d'addition une dioptrie. Les ordonnées sur le graphique de la figure 1 sont les ordonnées sur la lentille; les abscisses donnent en dioptries la différence de puissance avec le point de référence dans la zone de vision de loin.

Le point d'ordonnée y=8 mm sur la méridienne correspond au point L de référence pour la vision de loin, qui dans le cas de la figure, est le point de sphère minimale; en ce point, la sphère moyenne vaut 5,20 dioptries et le cylindre est nul; le point d'ordonnée y=-14 mm sur la méridienne est le point P de référence pour la vision de près; en ce point, la sphère moyenne vaut 6,22 dioptries et le cylindre vaut 0,02 dioptrie.

Dans le cas d'une lentille multifocale progressive, on appelle longueur principale de progression $L_{pp}$ la différence entre l'ordonnée de la croix de montage et l'ordonnée du point de la méridienne dont la sphère moyenne est égale à la somme de la sphère moyenne au point de référence pour la zone de vision de loin et de 85% de l'addition. Dans l'exemple de la figure 2, la sphère moyenne est supérieure de 85% de l'addition à la sphère moyenne au point de référence pour la zone de vision de loin en un point d'ordonnée y = -10,8 mm; pour une croix de montage d'ordonnée y = 4 mm, la longueur principale de progression est de 14,8 mm.

Dans le cas des lentilles multifocales dédiées à la vision de près et à la vision intermédiaire, on appelle longueur principale de progression le rapport entre l'addition telle que définie plus haut et la pente de sphère moyenne le long de la méridienne; ce rapport s'écrit

$$L_{pp} = (S_{max} - S_{min})/P_{mer}$$

où $S_{max}$ et $S_{min}$ sont respectivement les valeurs maximale et minimale de la sphère sur la méridienne, et $P_{mer}$ représente la valeur maximale de la pente de sphère le long de la méridienne; cette pente de sphère correspond au module maximal du gradient de la sphère par rapport à x et ou y. Ce rapport $L_{pp}$ est homogène à une longueur, et est représentatif de la longueur sur laquelle la sphère moyenne augmente d'une valeur correspondant à l'addition.

Dans les deux cas, la longueur principale de progression rend compte de la hauteur sur la méridienne correspondant à une variation de la sphère moyenne.

La figure 2 montre d'abord que la sphère reste sensiblement constante dans la zone de vision de loin, au dessus du point L. Elle montre aussi que la sphère reste sensiblement constante dans la zone de vision de près, au dessous du point P. Enfin, elle montre que la longueur principale de progression, qui vaut 14,8 mm, est faible, et notamment inférieure à 16 mm. On assure ainsi la possibilité d'utiliser la vision de près de façon prolongée, avec un grand confort.

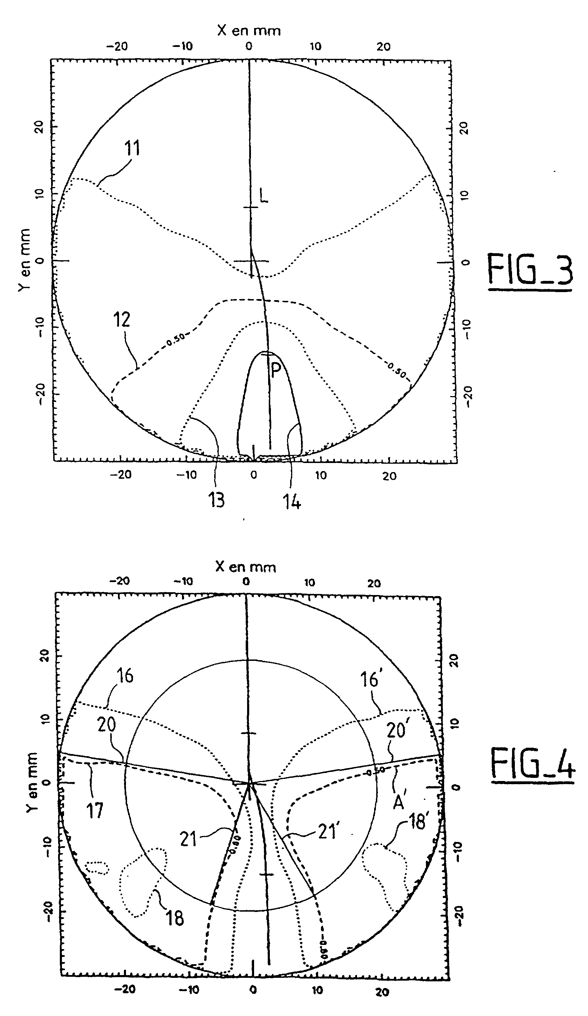

La figure 3 montre une vue de face de la lentille de la figure 2, montrant la méridienne principale de progression et des lignes de niveau de la sphère moyenne. On retrouve sur la figure 3 les éléments représentés sur la figure 2. On a en outre porté à la figure 3 les lignes d'isosphère. Les lignes d'isosphère de la figure 3 sont des lignes 11, 12, 13 et 14, qui présentent respectivement une sphère moyenne supérieure de 0,25, 0,5, 0,75 ou 1 dioptrie supérieure à celle du point L de vision de loin.

La figure 4 montre une vue de face de la lentille de la figure 2, montrant la méridienne principale de progression et des lignes de niveau du cylindre. On retrouve encore sur la figure 4 les éléments représentés sur la figure 2. Comme le cylindre est faible le long de la méridienne principale de progression, les lignes d'isocylindre sont au nombre de deux pour chaque valeur du cylindre. Les lignes d'isocylindre de la figure 4 sont des lignes 16 et 16', 17 et 17', 18 et 18' qui présentent respectivement un cylindre de 0,25, 0,50, et 0,75 dioptries.

Comme indiqué plus haut, dans la partie supérieure de la lentille, la limite de la zone de vision de loin est sensiblement constituée par les lignes 17 et 17' d'isocylindre 0,5. La lentille de l'invention présente donc une large zone de vision de loin, s'étendant sur presque toute la moitié supérieure de la lentille.

Dans la partie inférieure de la lentille, la limite de la zone de vision de près est aussi sensiblement constituée par les lignes 17 et 17' d'isocylindre 0,5. La figure 4 montre que la lentille de l'invention présente une largeur de la zone de vision de près, mesurée entre les isocylindres 17 et 17' au niveau du point P, qui est supérieure à 13 mm.

La valeur maximale du cylindre dans le disque de diamètre 40 mm centré sur le centre géométrique de la lentille est de 0,741 dioptrie; elle est atteinte au point de coordonnées x = - 16, y = - 12, qui est à une distance de 20 mm du centre de la lentille.

La lentille des figures 2 à 4 assure ainsi une grande douceur, tout en présentant toutefois une longueur de progression faible, et donc une zone de vision de près haute.

Quantitativement, ceci se traduit par la relation suivante:

$$C_{max}/d < 0,50.P_{mer} \qquad (1)$$

où

$C_{max}$ est la valeur maximale, en dioptrie, du cylindre dans le disque de diamètre 40 mm centré sur le centré géométrique de la lentille;
d est la distance, en mm, au centre géométrique du point de ce disque où cette valeur est atteinte;
$P_{mer}$ est la valeur maximale de la pente de sphère moyenne le long de la méridienne, en dioptrie par mm.

La valeur de 0,50 est donc sans dimension.

La relation (1) traduit le fait que la progression rapide de la sphère le long de la méridienne n'introduit pas de défauts trop importants dans la zone de vision fovéale de la lentille: la valeur $P_{mer}$ traduit la valeur maximale de la pente de la sphère, et une valeur importante est représentative d'une forte progression. La valeur $C_{max}$ est représentative des perturbations induites sur la surface de la lentille, dans la limite d'un disque de diamètre 40 mm, par la forte progressivité; cette valeur est pondérée par le coefficient 1/d, qui traduit que la perturbation est moins gênante en périphérie de la lentille qu'au centre de celle-ci.

La relation (1) n'est satisfaite par aucune des lentilles ophtalmiques progressives de l'art antérieur testées par la demanderesse. La valeur la plus proche de ce critère dans les lentilles de l'art antérieur est atteinte pour une des lentilles de la demanderesse, pour laquelle la quantité $C_{max}/d.P_{mer}$, telle que mesurée sur la lentille, atteint une valeur de 0,55. L'invention assure pour la première fois un tel compromis entre la forte progression et des perturbations particulièrement contrôlées dans la zone fovéale.

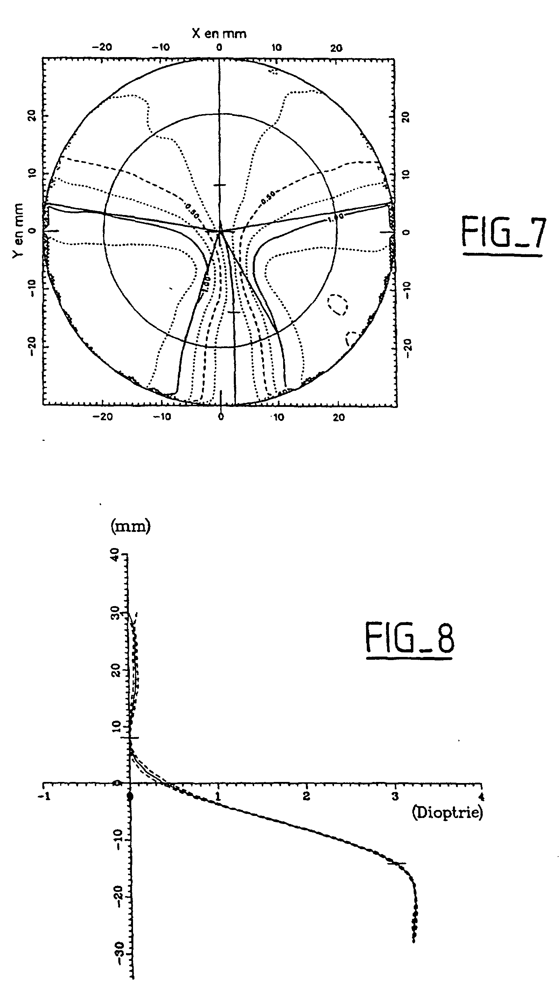

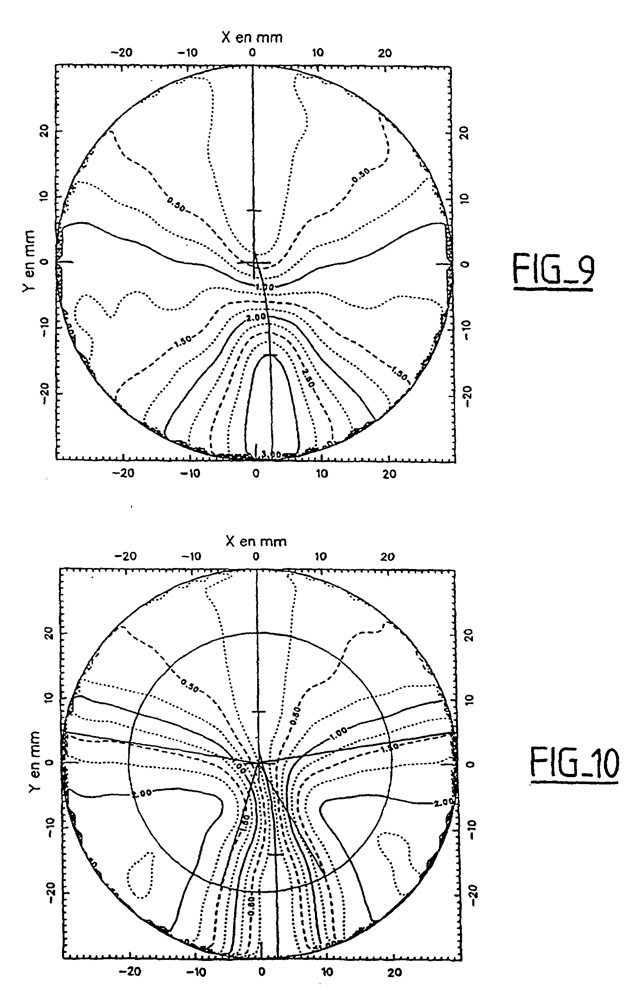

Les figures 5 à 7 montrent des vues analogues à celles des figures 2 à 4, mais pour une lentille d'addition 2 dioptries; les figures 8 à 10 montrent des vues analogues à celles des figures 2 à 4, mais pour une lentille d'addition 3 dioptries. Sur les figures 6 et 9 sont tracées les lignes d'isosphère, avec une pas de 0,25 dioptrie; sur les figures 8 et 10 sont tracées les lignes d'isocylindre, avec un pas de 0,25 dioptrie.

Pour chacune de ces lentilles, la relation est satisfaites, avec les valeurs suivantes :

$$C_{max}/d = 0{,}44.P_{mer}$$

L'invention propose d'autres caractéristiques avantageuses, qui, en combinaison avec la relation (1), permettent d'améliorer les performances de la lentille de l'invention.

Comme mentionné plus haut en référence à la figure 2, la longueur principale de progression est avantageusement inférieure à 16 mm; elle est de 14,8 mm pour la lentille d'addition 1; la longueur principale de progression est sensiblement identique pour la lentille d'addition 2, et pour la lentille d'addition 3. Cette faible longueur de progression est représentative d'une zone de vision de près s'étendant haut sur la lentille.

Avantageusement, le cylindre maximal dans le cercle de diamètre 40 mm est inférieur à l'addition, et de préférence inférieur à 80% de l'addition. A titre d'exemple, dans le cas d'une addition une dioptrie, le cylindre maximal dans ce cercle vaut 0,741 dioptries; il vaut 1,52 dioptries pour une addition de 2 dioptries et 2,28 dioptries pour une addition de 3 dioptries.

On peut prévoir que la différence entre le cylindre maximal de part et d'autre de la méridienne, dans le cercle de rayon 20 mm centré sur le centre géométrique de la lentille, est inférieure à 0,05 dioptrie, et de préférence inférieure à 0, 03 dioptrie.

Avantageusement, l'angle entre les demi-droites issues du centre géométrique de la lentille et passant par les points d'intersection du cercle de rayon 20 mm et des lignes formées des points dont le cylindre est égal à la moitié de l'addition, dans la zone de vision de près, est supérieur à 45°. Dans le mode de réalisation des figures 2 à 4, l'angle au centre de ces demi-droites, référencée 21 et 21' est de l'ordre de 45°. Sa valeur est sensiblement identique pour les lentilles d'addition 2 et 3 des figures 5 et suivantes; les demi-droites correspondantes sont aussi tracées sur les figures 7 et 10.

L'invention propose encore que la valeur maximale du cylindre soit sensiblement égale du côté nasal et du côté temporal de la lentille; cette valeur est avantageusement de l'ordre de 75% de l'addition définie plus haut; dans la lentille d'addition 1 selon la présente invention, le cylindre maximal du côté nasal vaut 0,734 dioptrie et il est atteint en un point de coordonnées x = 17 mm, y = -10 mm. Côté temporal, la valeur maximale du cylindre vaut 0,741 dioptrie et elle est atteint en un point de coordonnées x = -16 mm, y = -12 mm. Cette valeur maximale est atteinte à des points situés à des distances du centre géométrique de la lentille de 19,7 et 20 mm. Ceci assure que le point de cylindre maximal se trouve en périphérie de la zone utilisée pour la vision fovéale.

Dans un mode de réalisation de l'invention, la zone de vision de loin comprend au moins un secteur formé par deux demi-droites sécantes au centre géométrique de la lentille, l'angle entre ces deux demi-droites vers la partie supérieure de la lentille étant d'au moins de 130°. Il est avantageusement compris entre 160 et 165°. Comme on peut le voir sur la figure 4, dans le cas d'une addition d'une dioptrie, l'angle a entre les demi-droites, référencées 20 et 20' est de 163°. Pour une addition de deux ou trois dioptries, cet angle est sensiblement identique; on a aussi tracé les demi-droites correspondantes sur les figures 7 et 10.

On détaille maintenant les différentes caractéristiques qui permettent de réaliser les différentes lentilles selon l'invention. La surface des lentilles est de façon connue en soi, continue et trois fois continûment dérivable. Comme cela est connu de l'homme du métier, la surface de lentilles progressives s'obtient par optimisation numérique à l'aide d'un calculateur, en fixant des conditions aux limites pour un certain nombre de paramètres de la lentille.

On peut utiliser comme conditions aux limites un ou plusieurs des critères définis plus haut.

Ces critères s'appliquent tant pour une lentille multifocale progressive classique, avec un point de référence dans la zone de vision de loin et un point de référence dans la zone de vision de près, que pour une lentille multifocale dédiée à la zone de vision de près.

On peut aussi avantageusement commencer par définir, pour chacune des lentilles de la famille, une méridienne principale de progression. On peut utiliser à cet effet l'enseignement du brevet FR-A-2 683 642 susmentionné. On peut aussi utiliser toute autre définition de la méridienne principale de progression pour appliquer l'enseignement de l'invention.

Bien entendu, la présente invention n'est pas limitée à la présente description: entre autres, la surface asphérique pourrait être la surface dirigée vers le porteur des lentilles. Par ailleurs, on n'a pas insisté dans la description sur l'existence de lentilles qui peuvent être différentes pour les deux yeux.

**Revendications**

1. Lentille ophtalmique multifocale progressive, comportant une surface asphérique (S) présentant en tout point une sphère moyenne et un cylindre, et comprenant une zone de vision de loin (VL) avec un point de référence pour la vision de loin, une zone de vision de près (VP) avec un point de référence pour la vision de près, une addition définie comme la différence de sphère moyenne entre le point de référence pour la vision de près et le point de référence pour la vision de loin, une zone de vision intermédiaire (VI), une méridienne principale de progression (MM') traversant ces trois zones, une longueur principale de progression inférieure à 16 mm, la longueur principale de progression étant définie comme la distance verticale entre une croix de montage et un point de la méridienne où la sphère moyenne est supérieure de 85% de l'addition à la sphère moyenne au point de référence de la zone de vision de loin

    **caractérisée en ce que** le rapport entre le cylindre maximal $C_{max}$ dans un cercle de rayon de 20 mm centré sur le centre géométrique de la lentille et la distance d entre le centre géométrique de la lentille et le point à l'intérieur de ce cercle où ce cylindre maximal est atteint est inférieur ou égal à la moitié de la pente maximale de sphère moyenne $P_{mer}$ sur la méridienne principale de progression:

$$C_{max}/d < 0{,}50.P_{mer}$$

2. Lentille ophtalmique multifocale dédiée à la vision de près et à la vision intermédiaire, comportant une surface asphérique (S) présentant en tout point une sphère moyenne et un cylindre, et comprenant une zone de vision de près (VP), une zone de vision intermédiaire (VI), et une méridienne principale de progression (MM') traversant ces deux zones,

    **caractérisée en ce qu'**elle présente une addition A définie comme la différence entre les valeurs maximale et minimale de la sphère moyenne sur la méridienne principale de progression, dans un cercle de rayon de 20 mm centré sur le centre géométrique de la lentille,

en ce que la longueur principale de progression est inférieure à 16 mm, la longueur principale de progression étant définie comme le rapport entre l'addition A et la pente maximale de sphère moyenne sur la méridienne

et en ce que le rapport entre le cylindre maximal $C_{max}$ dans un cercle de rayon de 20 mm centré sur le centre géométrique de la lentille et la distance d entre le centre géométrique de la lentille et le point à l'intérieur de ce cercle où ce cylindre maximal est atteint est inférieur ou égal à la moitié de la pente maximale de sphère moyenne Pmer sur la méridienne principale de progression:

$$C_{max}/d < 0{,}50.P_{mer}$$

3. Lentille selon la revendication 1 ou 2, **caractérisée en ce que** la méridienne principale de progression est constituée des milieux des segments horizontaux reliant les lignes respectives formées des points de cylindre 0,50 dioptrie.

4. Lentille selon la revendication 1, 2 ou 3, **caractérisée en ce que** le cylindre dans le cercle de rayon 20 mm centré sur le centre géométrique de la lentilles est inférieur à l'addition, de préférence inférieur à 80% de l'addition.

5. Lentille selon l'une des revendications 1 à 4, **caractérisée en ce que** la différence entre le cylindre maximal de part et d'autre de la méridienne, dans le cercle de rayon 20 mm centré sur le centre géométrique de la lentille, est inférieure à 0,05 dioptrie, et de préférence inférieur à 0, 03 dioptrie.

6. Lentille selon l'une des revendications 1 à 5, **caractérisée en ce que** l'angle entre les demi-droites issues du centre géométrique de la lentille et passant par les points d'intersection du dit cercle et des lignes formées des points dont le cylindre est égal à la moitié de l'addition, dans la zone de vision de près, est supérieur à 45°.

7. Lentille selon l'une des revendications 1, 3 à 6, **caractérisée en ce que** la zone de vision de loin, délimitée dans la partie supérieure de la lentille par les lignes formées des points dont le cylindre est égal à la moitié de l'addition, contient un secteur angulaire formé de deux demi-droites d'origine le centre géométrique de la lentille et ayant un angle au centre supérieur à 130°, et de préférence compris entre 160 et 165°.

**Patentansprüche**

1. Multifokale ophthalmische Gleitsichtlinse, umfassend eine asphärische Fläche (S), die an jedem Punkt eine mittlere Flächenbrechkraft und einen Flächenastigmatismus zeigt, und umfassend eine Fernsichtzone (VL) mit einem Referenzpunkt für die Fernsicht, eine Nahsichtzone (VP) mit einem Referenzpunkt für die Nahsicht, eine Addition, definiert als die Differenz der mittleren Flächenbrechkraft zwischen dem Referenzpunkt für die Nahsicht und dem Refernzpunkt für die Fernsicht, eine Mittelsichtzone (VI), einen Hauptprogressionsmeridian (MM'), der die drei Zonen durchquert, eine Hauptprogressionslänge von weniger als 16 mm, wobei die Hauptprogressionslänge definiert ist als der vertikale Abstand zwischen einem Montagekreuz und einem Punkt des Meridians, an dem die mittlere Flächenbrechkraft größer ist als 85% der Addition bezüglich der mittleren Flächenbrechkraft am Referenzpunkt der Fernsichtzone, **dadurch gekennzeichnet, daß** die Beziehung zwischen dem maximalen Astigmatismus bzw. Zylinder $C_{max}$ in einem Kreis mit einem Radius von 20 mm, zentriert mit Bezug auf die geometrische Mitte der Linse, und dem Abstand d zwischen der geometrischen Mitte der Linse und dem Punkt im Inneren des Kreises, an dem der maximale Astigmatismus erreicht ist, kleiner oder gleich ist zu der Hälfte des maximalen Gradienten der mittleren Flächenbrechkraft $P_{mer}$ an

dem Hauptprogressionsmeridian:

$$C_{max}/d < 0{,}50.P_{mer}$$

**2.** Zur Nahsicht und zur Mittelsicht bestimmte multifokale ophthalmische Linse, umfassend eine asphärische Fläche (S), die an jedem Punkt eine mittlere Flächenbrechkraft und einen Flächenastigmatismus aufweist, und umfassend eine Nahsichtzone (VP), eine Mittelsichtzone (VI) und einen Hauptprogressionsmeridian (MM'), der die zwei Zonen durchquert, **dadurch gekennzeichnet, daß** sie eine Addition A aufweist, definiert als die Differenz zwischen den Maximal- und Minimalwerten der mittleren Flächenbrechkraft an dem Hauptprogressionsmeridian, liegend in einem Kreis mit einem Radius von 20 mm, mittig bezüglich der geometrischen Mitte der Linse,

daß die Hauptprogressionslänge geringer als 16 mm ist, wobei die Hauptprogressionslänge definiert ist als die Beziehung zwischen der Addition A und dem maximalen Gradienten der mittleren Flächenbrechkraft an dem Meridian, und daß die Beziehung zwischen dem maximalen Flächenastigmatismus bzw. Zylinder $C_{max}$ in einem Kreis mit einem Radius von 20 mm, mittig vorliegend bezüglich der geometrischen Mitte der Linse, und dem Abstand d zwischen der geometrischen Mitte der Linse und dem Punkt im Inneren des Kreises, an dem der maximale Flächenastigmatismus erreicht ist, kleiner oder gleich ist zu der Hälfte des maximalen Gradienten der mittleren Flächenbrechkraft $P_{mer}$ an dem Hauptprogressionsmeridian:

$$C_{max}/d < 0{,}50.P_{mer}$$

**3.** Linse nach Anspruch 1 oder 2, **dadurch gekennzeichnet, daß** der Hauptprogressionsmeridian gebildet ist aus Mitten von horizontalen Segmenten, die Linien verbinden, die jeweils gebildet sind aus Punkten mit einem Flächenastigmatismus bzw. Zylinder von 0,50 Dioptrie.

**4.** Linse nach Anspruch 1, 2 oder 3, **dadurch gekennzeichnet, daß** der Flächenastigmatismus bzw. Zylinder in dem Kreis mit Radius von 20 mm, mittig vorliegend bezüglich der geometrischen Mitte der Linse, kleiner ist als die Addition, insbesondere kleiner als 80% der Addition.

**5.** Linse nach einem der Ansprüche 1 bis 4, **dadurch gekennzeichnet, daß** die Differenz zwischen dem maximalen Flächenastigmatismus beidseitig des Meridians, in dem Kreis mit Radius von 20 mm, mittig bzw. zentriert bezüglich der geometrischen Mitte der Linse, kleiner ist als 0,05 Dioptrie und insbesondere kleiner als 0,03 Dioptrie.

**6.** Linse nach einem der Ansprüche 1 bis 5, **dadurch gekennzeichnet, daß** der Winkel zwischen den Halbgeraden, ausgehend von der geometrischen Mitte der Linse und durch Schnittpunkte des Kreises mit Linien tretend, die gebildet sind durch Punkte, deren Flächenastigmatismus gleich ist zu der Hälfte der Addition, in der Nahsichtzone größer ist als 45°.

**7.** Linse nach einem der Ansprüche 1, 3 bis 6, **dadurch gekennzeichnet, daß** die Fernsichtzone, begrenzt in dem oberen Abschnitt der Linse durch Linien, die gebildet sind aus Punkten, deren Flächenastigmatismus bzw. Zylinder gleich ist zu der Hälfte der Addition, einen winkelmäßigen Sektor enthält, gebildet aus zwei Halbgeraden mit der geometrischen Mitte der Linse als Ursprung und über einen Winkel in der Mitte verfügend von mehr als 130° und insbesondere enthalten zwischen 160° und 165°.

## Claims

**1.** A multifocal ophthalmic lens comprising an aspherical surface (S) having at every point thereon a mean sphere and a cylinder, and comprising a far vision region (VL) with a reference point for far vision, a near vision region (VP) with a reference point for near vision, a power addition defined as a difference between the values of mean sphere at the near and far vision reference points, an intermediate vision region (VI), a main meridian of progression (MM') passing through said three regions, a main length of progression shorter than 16 mm, the principal length of progression being defined as a difference in height between the y-axis value of a mounting center and the y-axis value of a point on said meridian at which mean sphere is equal to the sum of mean sphere at said reference point for far vision, plus 85% of said power addition,

**characterized in that** a ratio between maximum cylinder $C_{max}$ in a 20 mm radius circle centered on a geometrical center of said lens and the distance d between a geometrical center of said lens and a point inside said circle where cylinder is at a maximum value, is less than or equal to half the maximum slope of mean sphere $P_{mer}$ along the main meridian of progression whereby :

$$C_{max}/d < 0.50.P_{mer}$$

**2.** A multifocal lens dedicated to near vision and intermediate vision, comprising an aspherical surface (S) having at every point thereon a mean sphere and a cylinder, and comprising a near vision region (VP), an intermediate vision region (VI), and a main meridian of progression (MM') passing through said two regions

**characterized in that** the lens has a power addition A defined as a difference between maximum and minimum values of mean sphere of said meridian of progression inside a 20 mm radius circle centered on the geometrical center of said lens,

in that the principal length of progression is less than 16 mm, the principle length of progression being defined as a ratio between power addition A and maximum slope of mean sphere on said meridian,
in that a ratio between maximum cylinder $C_{max}$ in a 20 mm radius circle centered on a geometrical center of said lens and the distance d between a geometrical center of said lens and a point inside said circle where cylinder is at a maximum value, is less than or equal to half the maximum slope of mean sphere $P_{mer}$ along the main meridian of progression whereby :

$$C_{max}/d < 0.50.P_{mer}$$

3. Lens according to claim 1 or 2, **characterized in that** said main meridian of progression is made up by the mid-points of horizontal segments joining respective lines formed by points where cylinder is 0.50 diopter.

4. The lens according to one of claims 1, 2 or 3, **characterized in that** cylinder within said 20 mm radius circle centered on a geometrical center of the lens is less than power addition, preferably less than 80% of power addition.

5. The lens according to one of claims 1 to 4, **characterized in that** a difference between maximum cylinder on both sides of said meridian, within said 20 mm radius circle centered on a geometrical center of the lens is less than 0.05 diopter and preferably less than 0.03 diopter.

6. The lens according to one of claims 3 to 8, **characterized in that** an angle between half-lines originating from a geometrical center of said lens and passing through the points of intersection of said circle and lines formed of points where cylinder is equal to half power addition in said near vision region, is greater than 45°.

7. The lens according to one of claims 1, 3 to 6, **characterized in that** said far vision region defined in an upper portion of said lens by lines formed by points where cylinder is equal to half power addition, contains an angular sector formed by two half-lines originating at a geometrical center of said lens and having an included angle greater than 130° and preferably comprised between 160 and 165°.

FIG_1

FIG_2

(mm)

(Dioptrie)

FIG_3

FIG_4

FIG_5

FIG_6

FIG_7

FIG_8

FIG_9

FIG_10